# EUROPEAN PATENT APPLICATION

(11) **EP 4 395 004 A1**
(43) Date of publication of application: **03.07.2024**
(21) Application number: 22922734.3
(22) Date of filing: 27.01.2022
(51) Int. Cl.: H01M 10/613, H01M 10/6557, H01M 10/6567, H01M 50/10

(54) **BATTERY, ELECTRICAL DEVICE, BATTERY PREPARATION METHOD, AND BATTERY PREPARATION DEVICE**

(71) Applicant: Contemporary Amperex Technology Co., Limited, Ningde City, Fujian 352100 (CN)
(72) Inventor: HUANG, Yincheng, Ningde Fujian 352100 (CN); ZHOU, Yandong, Ningde Fujian 352100 (CN); ZHOU, Linggang, Ningde Fujian 352100 (CN); WANG, Lei, Ningde Fujian 352100 (CN); XU, Jinmei, Ningde Fujian 352100 (CN); SHEN, Zhen, Ningde Fujian 352100 (CN)
(74) Representative: Holt, Lucy Rose
(86) International application number: PCT/CN2022/074356
(87) International publication number: WO 2023/141888

(57) **Abstract**

Embodiments of the present application provide a battery, an electrical device, and a battery preparation method and device. The battery comprises: battery cells each having two opposite end surfaces in a first direction, an electrode terminal being provided on at least one of the end surfaces; and thermal management components. The battery cells also have side surfaces, and the thermal management components perform temperature regulation on the side surfaces of the battery cells. Each battery cell comprises a first battery cell and a second battery cell adjacent to each other in a second direction, the second direction is orthogonal to the first direction, and the thermal management component performing temperature regulation on the first battery cell and the second battery cell forms a thermal management module together with the first battery cell and the second battery cell.

## Description

### TECHNICAL FIELD

The present application relates to the field of energy storage apparatuses, and more particularly, to a battery, an electrical apparatus, a method for preparing a battery, and an apparatus for preparing a battery.

### BACKGROUND ART

Energy conservation and emission reduction are key to sustainable development of the automobile industry. In this case, electric vehicles have become an important part of the sustainable development of the automobile industry due to their advantages of energy conservation and environmental protection. For electric vehicles, battery technology is an important factor related to their development.

With the continuous development of the battery technology, higher requirements are placed on the performance of the battery, and it is expected that the battery can consider various design factors at the same time.

### SUMMARY OF THE INVENTION

The present application provides a battery, an electrical apparatus, a method for preparing a battery, and an apparatus for preparing a battery, to improve the safety of a battery.

In a first aspect, a battery is provided, including: battery cells, each including two end surfaces opposite to each other in a first direction, wherein at least any one of the end surfaces is provided with an electrode terminal; and a thermal management component, wherein each of the battery cells further includes side surfaces, and the thermal management component performs temperature adjustment on the side surfaces of the battery cell; the battery cells include a first battery cell and a second battery cell which are adjacent in a second direction, and the second direction is orthogonal to the first direction; and the thermal management component for performing temperature adjustment on the first battery cell and the second battery cell forms a thermal management module together with the first battery cell and the second battery cell.

In the battery, in order to keep temperatures of the battery cells within a certain range to improve electrochemical performance of the battery, the thermal management component is used to perform temperature adjustment on the battery cells.

In the technical solution of the present application, the battery cells have the end surfaces and the side surfaces, and the end surfaces are provided with the electrode terminals, so that the thermal management component is used to perform temperature adjustment on the side surfaces of the battery cells. Furthermore, the thermal management component for performing temperature adjustment on the first battery cell and the second battery cell forms the thermal management module together with the first battery cell and the second battery cell. In this way, a plurality of thermal management modules can be formed in advance, and the battery can be formed by assembling the plurality of thermal management modules. This modular manufacturing method can improve the mounting accuracy of the battery cells and the thermal management component and easily control the thermal management efficiency of each part of the battery to be uniform, and can greatly improve the production efficiency.

In some embodiments, the side surfaces of each battery cell includes: a first side surface and a second side surface which are opposite to each other in the second direction; and a third side surface and a fourth side surface which are opposite to each other in a third direction; the third direction is orthogonal to the first direction and the second direction; and the thermal management component abuts against at least any one of the first side surface, the second side surface, the third side surface, and the fourth side surface, so as to perform temperature adjustment on the abutted side surface. Thus, in a case that the side surfaces of each of the battery cells include the first side surface, the second side surface, the third side surface, and the fourth side surface, the thermal management component performs temperature adjustment on at least any one of these side surfaces in a manner of abutting against the side surfaces.

In some embodiments, the first side surface, the second side surface, the third side surface, and the fourth side surface of each battery cell are formed as planar. Since the first side surface, the second side surface, the third side surface, and the fourth side surface are formed as planar, the abutment between the thermal management component and the side surface is achieved by a simple structure, which further improves the thermal management efficiency.

In some embodiments, in the thermal management module, the thermal management component includes an intermediate thermal management component arranged between the first battery cell and the second battery cell; and the intermediate thermal management component abuts against the second side surface of the first battery cell and the first side surface of the second battery cell respectively. By the adoption of the structure, it is possible to use the intermediate thermal management component located between the first battery cell and the second battery cell to simultaneously perform temperature adjustment on the side surfaces of the first battery cell and the second battery cell on both sides, which can improve the thermal management efficiency.

In some embodiments, the intermediate thermal management component is provided with a plurality of flow channels configured to circulate a fluid. Since the plurality of flow channels are formed, a flow channel area of the thermal management component for temperature adjustment can be enlarged by using the plurality of flow channels, which increases a flow velocity of the fluid, thereby improving the thermal management efficiency.

In some embodiments, in the thermal management module, the thermal management component further includes an upper-side thermal management component for performing temperature adjustment on the third side surfaces of the first battery cell and the second battery cell, or a lower-side thermal management component for performing temperature adjustment on the fourth side surfaces of the first battery cell and the second battery cell. Thus, the thermal management component can perform temperature adjustment on the third side surfaces or the fourth side surfaces of the battery cells by using the upper-side thermal management component or the lower-side thermal management component while performing temperature adjustment by using the intermediate thermal management component. Therefore, the area for temperature adjustment can be further enlarged, and the thermal management efficiency can be improved.

In some embodiments, the upper-side thermal management component or the lower-side thermal management component is provided with a plurality of flow channels configured to circulate a fluid. Therefore, a flow channel area of the thermal management component for temperature adjustment can be enlarged by using the plurality of flow channels, which increases a flow velocity of the fluid, thereby improving the thermal management efficiency.

In some embodiments, in the thermal management module, the thermal management component further comprises an upper-side thermal management component for performing temperature adjustment on the third side surfaces of the first battery cell and the second battery cell, and a lower-side thermal management component for performing temperature adjustment on the fourth side surfaces of the first battery cell and the second battery cell. Thus, the thermal management component can perform temperature adjustment respectively on the third side surfaces and the fourth side surfaces of the battery cells by using the upper-side thermal management component and the lower-side thermal management component while performing temperature adjustment by using the intermediate thermal management component. Therefore, the area for temperature adjustment can be further enlarged, and the thermal management efficiency can be improved.

In some embodiments, the upper-side thermal management component and the lower-side thermal management component are provided with a plurality of flow channels, and the intermediate thermal management component is provided with a plurality of flow channels. At this time, in a case that the thermal management component includes the intermediate thermal management component, the upper-side thermal management component, and the lower-side thermal management component, the area for temperature adjustment can be further enlarged by using the plurality of flow channels arranged in these thermal management components, and the thermal management efficiency can be improved.

In some embodiments, the upper-side thermal management component and the lower-side thermal management component are plate components without flow channels, and the intermediate thermal management component is provided with a plurality of flow channels. At this time, in a case that the thermal management component includes the intermediate thermal management component, the upper-side thermal management component, and the lower-side thermal management component, the plurality of flow channels arranged in the intermediate thermal management component, and the upper-side thermal management component and the lower-side thermal management component which serve as the plate components with good thermal conductivity can be used to perform temperature adjustment, which can also improve the thermal management efficiency.

In some embodiments, the upper-side thermal management component and the lower-side thermal management component are provided with a plurality of flow channels, and the intermediate thermal management component is a plate component without flow channels. At this time, in a case that the thermal management component includes the intermediate thermal management component, the upper-side thermal management component, and the lower-side thermal management component, the plurality of flow channels arranged in the upper-side thermal management component and the lower-side thermal management component, and the intermediate thermal management component which serves as the plate component with good thermal conductivity can be used to perform temperature adjustment, which can also improve the thermal management efficiency.

In some embodiments, the intermediate thermal management component is used as a supporting beam of the battery. When the intermediate thermal management component is formed by the plate component with good thermal conductivity and rigidity, the intermediate thermal management component can be used as the supporting beam of the battery, so that an additional component used as the supporting beam is not required, which can reduce a quantity of components, enlarge a space for arranging the battery cells, and improve the overall energy density and power supplying capacity of the battery.

In some embodiments, in the thermal management module, the thermal management component further comprises a lateral thermal management component for performing temperature adjustment on other side surfaces of the first battery cell and the second battery cell, so that the thermal management component is used to perform temperature adjustment on all the side surfaces of the first battery cell and the second battery cell. Thus, in each of the battery cells, except for the end surface provided with the electrode terminal, the thermal management component is used to perform temperature adjustment on all the side surfaces, so that the temperature adjustment area can be enlarged to the largest extent, and the thermal management efficiency can be improved, so as to improve the safety of the battery.

In some embodiments, the upper-side thermal management component and/or the lower-side thermal management component and the intermediate thermal management component are integrally formed. When the upper-side thermal management component and/or the lower-side thermal management component are formed, the thermal management module can be modularized more easily by means of integrally forming the upper-side thermal management component and/or the lower-side thermal management component and the intermediate thermal management component, which improves the mounting accuracy and assembling efficiency of the thermal management module.

In some embodiments, the battery is provided with a box; the box is configured to accommodate the battery cells and the thermal management component; and the upper-side thermal management component and/or the lower-side thermal management component are integrated to the box. That is, when the upper-side thermal management component and/or the lower-side thermal management component are formed, the upper-side thermal management component and/or the lower-side thermal management component are integrated into the box of the battery. For example, when the box is provided with an upper cover and a box shell, the upper-side thermal management component is integrated to the upper cover, and the lower-side thermal management component is integrated to the box shell. Thus, the upper cover and the box shell which are integrated with the thermal management component can be used to form a thermal management environment that wraps the entire battery, thereby improving the safety of the battery. Furthermore, the structure of the battery can be simplified, and the space for arranging the battery cells in the box of the battery is enlarged, thereby improving the energy density and power supplying performance of the battery.

In some embodiments, in the thermal management module, the thermal management component comprises an upper-side thermal management component for performing temperature adjustment on the third side surfaces of the first battery cell and the second battery cell, and a lower-side thermal management component for performing temperature adjustment on the fourth side surfaces of the first battery cell and the second battery cell; and a gap is formed between the first battery cell and the second battery cell. In this implementation, the thermal management module is not provided with the intermediate thermal management component between the first battery cell and the second battery cell, but the gap is formed between the first battery cell and the second battery cell, so that the temperature adjustment of the battery cells is achieved by using the upper-side thermal management component and the lower-side thermal management component. This gap can be used to arrange other desired structural components to increase the degree of configurational freedom.

In some embodiments, the battery is provided with a box; the box is configured to accommodate the battery cells and the thermal management component; and the upper-side thermal management component and/or the lower-side thermal management component are integrated to the box. In this embodiment where no intermediate thermal management component is arranged between the first battery cell and the second battery cell, the upper-side thermal management component and/or the lower-side thermal management component can also be integrated to the box of the battery. Thus, the upper cover and the box shell which are integrated with the thermal management component can be used to form a thermal management environment that wraps the entire battery, thereby improving the safety of the battery. Furthermore, the structure of the battery can be simplified, and the space for arranging the battery cells in the box of the battery is enlarged, thereby improving the energy density and power supplying performance of the battery.

In some embodiments, a thermal insulation component is arranged in the gap. Thus, heat transfer between the first battery cell and the second battery cell can be blocked by using the thermal insulation component.

In some embodiments, the thermal insulation component is used as a supporting beam of the battery. When the thermal insulation component with sufficient rigidity is arranged between the first battery cell and the second battery cell, the thermal insulation component can be used as the supporting beam of the battery, thereby reducing a quantity of components, increasing the utilization rate of a space inside the battery, and increasing the overall energy density of the battery.

In some embodiments, in the thermal management module, the plurality of battery cells are arranged in the first direction, and the thermal management component extends in the first direction to perform thermal management on the plurality of battery cells. In a case that the plurality of battery cells are arranged in the first direction, if the thermal management component also extends in the first direction, the thermal management component can perform thermal management on the plurality of battery cells, so that the overall thermal management efficiency of the thermal management module can be improved.

In a second aspect, an electrical apparatus is provided, including the battery in the first aspect. The battery is configured to provide electric energy.

In a third aspect, a method for preparing a battery is provided, including: providing battery cells, wherein each of the battery cells includes: two end surfaces opposite to each other in a first direction, and side surfaces, wherein at least any one of the end surfaces is provided with an electrode terminal; the battery cells include a first battery cell and a second battery cell which are adjacent in a second direction, and the second direction is orthogonal to the first direction; providing a thermal management component, wherein the thermal management component performs temperature adjustment on the side surfaces of the battery cells; and combining the thermal management component for performing temperature adjustment on the first battery cell and the second battery cell with the first battery cell and the second battery cell to form a thermal management module.

In a fourth aspect, an apparatus for preparing a battery is provided, including: a first providing module, configured to provide battery cells, wherein each of the battery cells includes: two end surfaces opposite to each other in a first direction, and side surfaces, wherein at least any one of the end surfaces is provided with an electrode terminal; the battery cells comprise a first battery cell and a second battery cell which are adjacent in a second direction, and the second direction is orthogonal to the first direction; a second providing module, configured to provide a thermal management component, wherein the thermal management component performs temperature adjustment on the side surfaces of the battery cells; and a mounting module, configured to combine the thermal management component for performing temperature adjustment on the first battery cell and the second battery cell with the first battery cell and the second battery cell to form a thermal management module.

### DESCRIPTION OF DRAWINGS

The drawings described herein are intended to provide a further understanding of the present application, which constitute a part of the present application. The illustrative embodiments of the present application and the description thereof are for explaining the present application and do not constitute an undue limitation of the present application. In the drawings:
Fig.1 is a schematic structural diagram of a vehicle according to an embodiment of the present application;
Fig. 2 is a schematic diagram of a three-dimensional structure of a battery according to an embodiment of the present application;
Fig. 3 is a schematic diagram of various end surfaces and side surfaces of a battery cell according to an embodiment of the present application;
Fig. 4(a) is a schematic diagram of a three-dimensional structure of a thermal management module according to one embodiment of the present application, and Fig. 4(b) is a directional view obtained by observing an end portion of the thermal management module shown in Fig. 4(a) in a first direction;
Fig. 5(a) is a schematic diagram of a three-dimensional structure of a thermal management module according to one embodiment of the present application, and Fig. 5(b) is a directional view obtained by observing an end portion of the thermal management module shown in Fig. 5(a) in a first direction;
Fig. 6(a) is a schematic diagram of a three-dimensional structure of a thermal management module according to one embodiment of the present application, and Fig. 6(b) is a directional view obtained by observing an end portion of the thermal management module shown in Fig. 6(a) in a first direction;
Fig. 7(a) is a schematic diagram of a three-dimensional structure of a thermal management module according to one embodiment of the present application, and Fig. 7(b) is a directional view obtained by observing an end portion of the thermal management module shown in Fig. 7(a) in a first direction;
Fig. 8(a) is a schematic diagram of a three-dimensional structure of a thermal management module according to one embodiment of the present application, and Fig. 8(b) is a directional view obtained by observing an end portion of the thermal management module shown in Fig. 8(a) in a first direction;
Fig. 9(a) is a schematic diagram of a three-dimensional structure of a thermal management module according to one embodiment of the present application, and Fig. 9(b) is a directional view obtained by observing an end portion of the thermal management module shown in Fig. 9(a) in a first direction;
Fig. 10 is a schematic flowchart of a method for preparing a battery according to an embodiment of the present application; and
Fig. 11 is a schematic block diagram of an apparatus for preparing a battery according to an embodiment of the present application.

### DETAILED DESCRIPTION

In order to make the objectives, technical solutions, and advantages of the embodiments of the present application clearer, the technical solutions in the embodiments of the present application are clearly described below with reference to the accompanying drawings in the embodiments of the present application. It will be apparent that the described embodiments are merely some rather than all of the embodiments of the present application. All other embodiments obtained by a person of ordinary skill in the art based on the embodiments of the present application without making creative efforts shall fall within the protection scope of the present application.

Unless otherwise defined, all technical and scientific terms used in the present application have the same meaning as commonly understood by those skilled in the art of the present application. The terms used in this specification in the present application are intended only for the purpose of describing specific embodiments and are not intended to limit the present application. The terms "include" and "has/have", as well as any variations thereof, in the specification and claims of the present application, as well as the accompanying drawings, are intended to encompass non-exclusive inclusion. This specification and claims of the present application, and terms "first" and "second" in the above drawings are used to distinguish different objects, but are unnecessarily used to describe a specific sequence or order.

Reference to "an embodiment" in the present application means that a particular feature, structure or characteristic described in conjunction with an embodiment may be included in at least one embodiment of the present application. The phrase shown in various locations in the specification may not necessarily refer to a same embodiment, and is not an independent or optional embodiment exclusive from another embodiment. It is understood explicitly and implicitly by those skilled in the art that the embodiments described in the present application can be combined with other embodiments.

In the description of the present application, it should be noted that the terms "mounting", "connecting", "connection" and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. Those of ordinary skill in the art can understand the specific meanings of the above terms in the present application according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

The term "plurality" in the present application refers to more than two (including two), and similarly, "a plurality of groups" refers to more than two groups (including two groups); and "a plurality of sheets" refers to more than two sheets (including two sheets).

A battery mentioned in the embodiments of the present application refers to a single physical module including a plurality of battery cells to provide a higher voltage and capacity. For example, the battery mentioned in the present application may include a battery module, a battery pack, or the like.

The battery cell includes an electrode assembly and an electrolyte solution, and the electrode assembly includes a positive electrode plate, a negative electrode plate, and a separator. The battery cells work mainly relying on movement of metal ions between a positive electrode plate and a negative electrode plate. The positive electrode plate includes a positive electrode current collector and a positive electrode active material layer. A surface of the positive electrode current collector is coated with the positive electrode active material layer. A current collector that is not coated with the positive electrode active material layer protrudes out of a current collector that is coated with the positive electrode active material layer. The current collector that is not coated with the positive electrode active material layer serves as a positive tab. A lithium-ion battery is taken as an example. A material of the positive electrode current collector may be aluminum. A positive electrode active material may be lithium cobalt oxide, lithium iron phosphate, ternary lithium, lithium manganate, or the like. The negative electrode plate includes a negative electrode current collector and a negative electrode active material layer. A surface of the negative electrode current collector is coated with the negative electrode active material layer. A current collector that is not coated with the negative electrode active material layer protrudes out of a current collector that is coated with the negative electrode active material layer. The current collector that is not coated with the negative electrode active material layer serves as a negative tab. A material of the negative electrode current collector may be copper, and a negative electrode active material may be carbon, silicon, or the like. In order to ensure that no fusing occurs when a large current passes, there are a plurality of positive tabs which are stacked together, and there are a plurality of negative tabs which are stacked together. The material of the separator may be PP, PE, or the like. In addition, the electrode assembly may be of a wound structure or a laminated structure, which is not limited in the embodiments of the present application.

Many design factors, such as energy density, cycle life, discharge capacity, charge-discharge rate and other performance parameters, should be considered in the development of the battery technology. In addition, the safety of the battery also needs to be taken into account. At present, a battery of an electric vehicle often needs to be composed of dozens or even thousands of battery cells.

In the battery, a thermal management component is used to perform temperature adjustment on the battery cells to maintain temperatures of the battery cells in a certain range, so that the battery can display good electrochemical performance.

In view of this, the present application provides a technical solution: A battery includes: battery cells, each having two end surfaces opposite to each other in a first direction, wherein at least any one of the end surfaces is provided with an electrode terminal; and a thermal management component, wherein each of the battery cells further has side surfaces, and the thermal management component performs temperature adjustment on the side surfaces of the battery cell; the battery cells include a first battery cell and a second battery cell which are adjacent in a second direction, and the second direction is orthogonal to the first direction; and the thermal management component for performing temperature adjustment on the first battery cell and the second battery cell forms a thermal management module together with the first battery cell and the second battery cell.

In the technical solution of the present application, the battery cells have the end surfaces and the side surfaces, and the end surfaces are provided with the electrode terminals, so that the thermal management component is used to perform temperature adjustment on the side surfaces of the battery cells. Furthermore, the thermal management component for performing temperature adjustment on the first battery cell and the second battery cell forms the thermal management module together with the first battery cell and the second battery cell. In this way, a plurality of thermal management modules can be formed in advance, and the battery can be formed by assembling the plurality of thermal management modules. This modular manufacturing method can improve the mounting accuracy of the battery cells and the thermal management component and easily control the thermal management efficiency of each part of the battery to be uniform, and can greatly improve the production efficiency.

The thermal management component is configured to accommodate a fluid to adjust the temperatures of the battery cells. The fluid here may be liquid or gas, and the temperature adjustment refers to heating or cooling the battery cells. In a case of cooling the battery cells, the thermal management component is configured to accommodate a cooling fluid to lower the temperatures of the battery cells. In this case, the thermal management component may also be referred to as a cooling component, a cooling system, a cooling plate, or the like. The fluid accommodated by the thermal management component may also be referred to as a cooling medium or a cooling fluid, and more specifically, cooling liquid or cooling gas. In addition, the thermal management component may also be configured to perform heating to raise the temperatures of the plurality of battery cells, which will not be limited in the embodiments of the present application. Optionally, the fluid may flow in a circulating manner to achieve a better temperature adjustment effect. Optionally, the fluid may be water, a mixture of water and ethylene glycol, air, or the like.

An embodiment of the present application provides an electrical apparatus. A battery is configured to provide electric energy for the electrical apparatus.

The technical solutions described in the embodiments of the present application are all applicable to various apparatuses using batteries, such as a mobile phone, a portable device, a laptop, a battery vehicle, an electric toy, an electric tool, an electric vehicle, a ship, and a spacecraft. For example, the spacecrafts include airplanes, rockets, space shuttles, spaceships, and the like.

It should be understood that the technical solutions described in the embodiments of the present application are not only limited to being applicable to the apparatus described above, but also applicable to all apparatuses using batteries. However, for the sake of brevity, the following embodiments are described by taking an electric vehicle as an example.

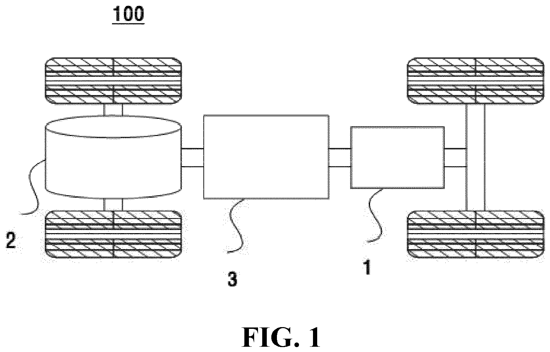

For example, Fig. 1 is a schematic structural diagram of a vehicle 100 according to an embodiment of the present application. The vehicle 100 may be a fuel vehicle, a gas vehicle, or a new energy vehicle, and the new energy vehicle may be a all-electric vehicle, a hybrid electric vehicle, an extended range electric vehicle, and the like. The interior of vehicle 100 may be provided with motor 2, controller 3, and battery 1, and controller 3 is configured to control battery 1 to supply power to motor 2. For example, battery 1 may be arranged at the bottom or the head or tail of vehicle 100. Battery 1 may be configured for power supply of vehicle 100. For example, battery 1 may be used as an operating power source of vehicle 100, and configured for work electricity requirements of a circuit system of vehicle 100, for example, for starting, navigation, and operation of vehicle 100. In another embodiment of the present application, the battery 1 not only may serve as the operating power source of the vehicle 100, but also may serve as a driving power source of the vehicle 100, thus replacing or partially replacing fuel or natural gas to provide driving power for the vehicle 100.

In order to meet different power requirements, the battery 1 may include a plurality of battery cells 6, wherein the plurality of battery cells 6 may be in series connection, in parallel connection, or in series-parallel connection, and the series-parallel connection refers to mixing of aa series connection and a parallel connection.

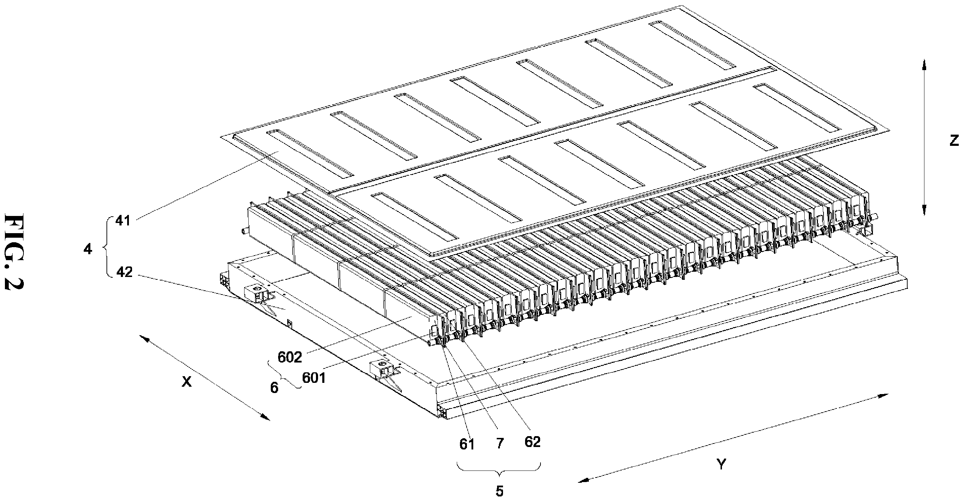

Fig. 2 is a schematic exploded diagram of a three-dimensional structure of a battery 1 according to an embodiment of the present application. The battery 1 includes a plurality of battery cells 6, and the plurality of battery cells 6 can be arranged in a first direction X and a second direction Y, wherein first direction X is orthogonal to the second direction Y. That is, the plurality of battery cells 6 in battery 1 may be arranged in a matrix-like structure. Optionally, the battery 1 may also be provided with only one battery cell 6, or a plurality of battery cells 6 arranged in the first direction X, or a plurality of battery cells 6 arranged in the second direction Y. The battery 1 may further include a box 4. The interior of the box 4 is a hollow structure, and the plurality of battery cells 6 are accommodated in the box 4. As shown in Fig. 2, the box 4 may include two parts, which are referred to here as an upper cover 41 and a box shell 42 respectively. The upper cover 41 and the box shell 42 are engaged together. A shape of the upper cover 41 and a shape of the box shell 42 may be determined according to a shape of a combination of the plurality of battery cells 6. For example, the upper cover 41 and the box shell 42 may each be a hollow cuboid with only one surface being an open surface. An opening of the upper cover 41 is opposite to an opening of the box shell 42, and the upper cover 41 and the box shell 42 are mutually engaged to form the box 4 with a closed chamber. It is also possible that the upper cover 41 is a cuboid with an opening and the box shell 42 is in a plate shape, or the box shell 42 is a cuboid with an opening and the upper cover 41 is in a plate shape. The upper cover 41 and the box shell 42 are arranged opposite to each other and engaged to form the box 4 with a closed chamber. After being combined in series connection, parallel connection, or series-parallel connection, the plurality of battery cells 6 are placed in the box 4 formed after the upper cover 41 and the box shell 42 are engaged.

Fig. 2 shows that the box 4 accommodates the plurality of battery cells 6. Each of the battery cells 6 has two end surfaces opposite to each other in the first direction X (one end surface can be seen in the figure). At least any one of the end surfaces is provided with an electrode terminal 601. Furthermore, a thermal management component 7 is provided to perform temperature adjustment on side surfaces other than the two end surfaces of the battery cells 6. The battery cells 6 include a first battery cell 61 and a second battery cell 62 which are adjacent in the second direction Y, and the second direction Y is orthogonal to the first direction X. In this embodiment, a battery cell located on a left side in the second direction Y is referred to as the first battery cell 61, and a battery cell located on a right side in the second direction Y is referred to as the second battery cell 62. The first battery cell 61, the second battery cell 62, and the thermal management component 7 for performing temperature adjustment on the first battery cell 61 and the second battery cell 62 form a thermal management module 5. That is, as shown in Fig. 2, in the second direction Y, for example, the first battery cell 61 located on the left side in the second direction Y, the second battery cell 62 located on the right side in the second direction Y, and the thermal management component 7 located between the first battery cell 61 and the second battery cell 62 form the thermal management module 5. The battery cells 6 in the thermal management module 5 and the thermal management component 7 can be bonded together by an adhesive, for example.

Each of the battery cells 6 includes the electrode terminal 601, a case 602, and one or more electrode assemblies (not shown) arranged in the case 602. The case 602 is determined according to a shape formed after the one or more electrode assemblies are combined. For example, the case 602 may be a hollow cuboid or a cube. Fig. 2 shows a structure in which the case 602 is the hollow cuboid. The one or more electrode assemblies can be placed inside the case 602. The case 602 is filled with electrolyte, such as an electrolyte solution. Fig. 2 shows an example in which one electrode terminal 601 is formed at each of the two end surfaces of the case 602 in the first direction X (one end is shown in the figure). However, it is also possible that two electrode terminals 601 with opposite polarities are both formed on one end surface of the case 602 in the first direction X. The electrode terminal 601 may be in various shapes such as cylinder, cuboid, cube, and polygonal prism. The electrode terminal 601 shown in this embodiment is of a cuboid structure.

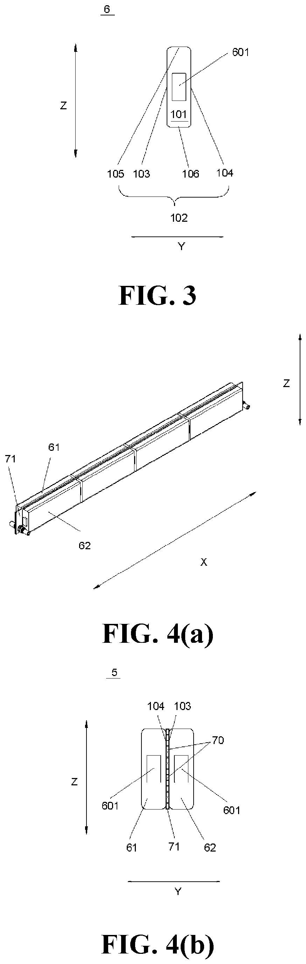

Fig. 3 is a schematic diagram of various end surfaces and side surfaces of a battery cell 6 according to an embodiment of the present application. The battery cell 6 in this embodiment is of a cuboid structure. The battery cell 6 includes: two end surfaces 101 (one of which is shown) opposite to each other in the first direction X, wherein the end surfaces 101 are provided with electrode terminals 601; and side surfaces 102. The side surfaces 102 include: a first side surface 103 and a second side surface 104 which are opposite to each other in the second direction; and a third side surface 105 and a fourth side surface 106 which are opposite to each other in a third direction Z; and the third direction Z is orthogonal to the first direction X and the second direction Y. In this embodiment, as an example, a side surface located on the left side in the second direction Y in the figure is referred to as the first side surface 103; a side surface located on the right side in the second direction is referred to as the second side surface 104; a side surface located on an upper side in the third direction is referred to as the third side surface 105; and a side surface located on a lower side in the third direction is referred to as a fourth side surface 106. The thermal management component 7 abuts against at least any one of the side surface 103, the second side surface 104, the third side surface 105, and the fourth side surface 106, so as to perform temperature adjustment on the abutted side surface 102.

This embodiment reflects that the first side surface 103, the second side surface 104, the third side surface 105, and the fourth side surface 106 of each battery cell 6 are formed as planar. Thus, the abutment between the thermal management component 7 and the side surface 102 can be achieved by a simple structure, which further improves the thermal management efficiency.

Fig. 4(a) is a schematic diagram of a three-dimensional structure of a thermal management module 5 according to an embodiment of the present application. Fig. 4(b) is a directional view obtained by observing an end portion of the thermal management module 5 shown in Fig. 4(a) in the first direction X. Fig. 4(a) also shows a fluid pipe head for connecting a flow path, and the illustration of the fluid pipe head is omitted in Fig. 4(b).

As shown in Fig. 4(a) and Fig. 4(b), in the thermal management module 5, the plurality of battery cells 6 are arranged in the first direction X, and an intermediate thermal management component 71 is arranged between two battery cells 6 adjacent to each other in the second direction Y. The intermediate thermal management component 71 abuts against the second side surface 104 of the first battery cell 61 and the first side surface 103 of the second battery cell 62 respectively. By the adoption of the structure, it is possible to use the intermediate thermal management component 71 located between the first battery cell 61 and the second battery cell 62 to simultaneously perform temperature adjustment on the first battery cell 61 and the second battery cell 62 on both sides, which can improve the thermal management efficiency.

Furthermore, the intermediate thermal management component 71 is provided with a plurality of flow channels 70 configured to circulate a fluid. As shown in Fig. 4(a) and Fig. 4(b), the flow channels 70 of the intermediate thermal management component 71 extend in the first direction X, and the plurality of flow channels 70 are arranged in the third direction Z. Since the plurality of flow channels 70 are formed, a flow channel area of the intermediate thermal management component 71 for temperature adjustment can be enlarged by using the plurality of flow channels 70, which increases a flow velocity of the fluid, thereby improving the thermal management efficiency.

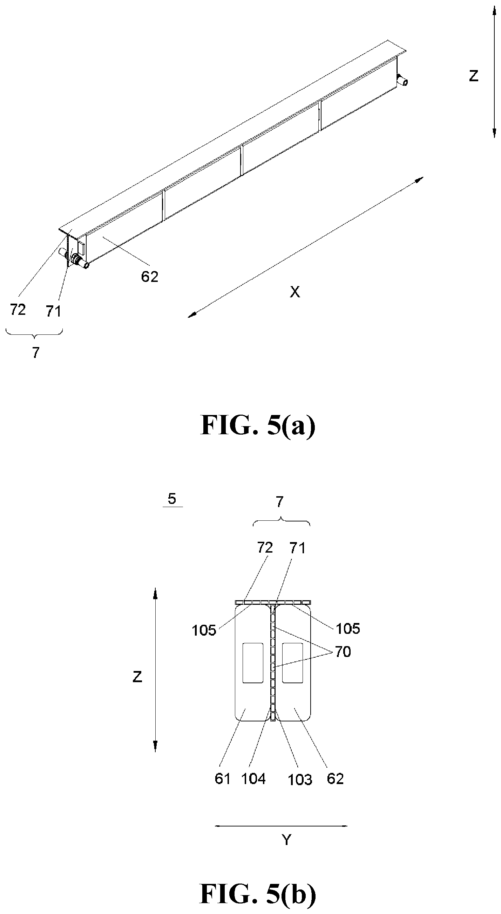

Fig. 5(a) is a schematic diagram of a three-dimensional structure of a thermal management module 5 according to an embodiment of the present application. Fig. 5(b) is a directional view obtained by observing an end portion of the thermal management module 5 shown in Fig. 5(a) in the first direction X (the illustration of the fluid pipe head is omitted). In the following descriptions, parts different from the implementations that have been described will be mainly described. The same constituent parts will be marked with the same reference numerals, and their descriptions will be omitted.

In the thermal management module 5, besides the intermediate thermal management component 71 located between the first battery cell 61 and the second battery cell 62, the thermal management component 7 further includes an upper-side thermal management component 72 for performing temperature adjustment on the third side surfaces 105 of the first battery cell 61 and the second battery cell 62. The thermal management component 7 is of a T-shaped structure as a whole since it includes the upper-side thermal management component 72 and the intermediate thermal management component 71. Thus, the thermal management component 7 can use the upper-side thermal management component 72 to perform temperature adjustment on the third side surfaces 105 of the first battery cell 61 and the second battery cell 62 while using the intermediate thermal management component 71 to perform temperature adjustment on the second side surface 104 of the first battery cell 61 and the first side surface 103 of the second battery cell 62. Therefore, the area for temperature adjustment can be further enlarged, and the thermal management efficiency can be improved.

The upper-side thermal management component 72 is provided with a plurality of flow channels 70 configured to circulate a fluid. As shown in Fig. 5(a) and Fig. 5(b), the flow channels 70 of the upper-side thermal management component 72 extend in the first direction X, and the plurality of flow channels 70 are arranged in the second direction Y. Since the plurality of flow channels 70 are formed, a flow channel area of the upper-side thermal management component 72 for temperature adjustment can be enlarged by using the plurality of flow channels 70, which increases a flow velocity of the fluid, thereby improving the thermal management efficiency.

However, this is not limited thereto. It is also possible that one of the upper-side thermal management component 72 and the intermediate thermal management component 71 is a plate component without flow channels, and the other one is provided with a plurality of flow channels 70. In this case, the plate component can be made of a material with good thermal conductivity, and the fluid in the plurality of flow channels 70 and the plate component with good thermal conductivity are used to perform temperature adjustment, which can also improve the thermal management efficiency.

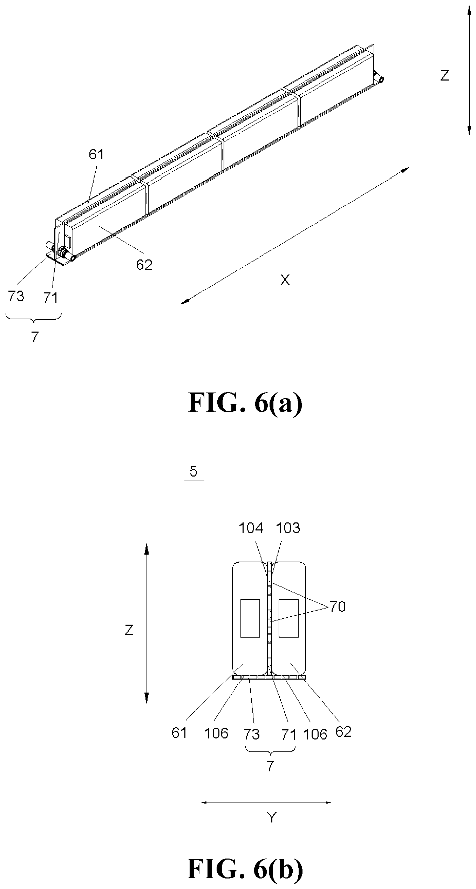

Fig. 6(a) is a schematic diagram of a three-dimensional structure of a thermal management module 5 according to an embodiment of the present application. Fig. 6(b) is a directional view obtained by observing an end portion of the thermal management module 5 shown in Fig. 6(a) in the first direction X (the illustration of the fluid pipe head is omitted). In the following descriptions, parts different from the implementations that have been described will be mainly described. The same constituent parts will be marked with the same reference numerals, and their descriptions will be omitted.

In the thermal management module 5, besides the intermediate thermal management component 71 located between the first battery cell 61 and the second battery cell 62, the thermal management component 7 further includes a lower-side thermal management component 73 for performing temperature adjustment on the fourth side surfaces 106 of the first battery cell 61 and the second battery cell 62. The thermal management component 7 is of an inverted T-shaped structure as a whole since it includes the intermediate thermal management component 71 and the lower-side thermal management component 73. Thus, the thermal management component 7 can use the lower-side thermal management component 73 to perform temperature adjustment on the fourth side surfaces 106 of the first battery cell 61 and the second battery cell 62 while using the intermediate thermal management component 71 to perform temperature adjustment on the second side surface 104 of the first battery cell 61 and the first side surface 103 of the second battery cell 62. Therefore, the area for temperature adjustment can be further enlarged, and the thermal management efficiency can be improved.

The lower-side thermal management component 73 is provided with a plurality of flow channels 70 configured to circulate a fluid. As shown in Fig. 6(a) and Fig. 6(b), the flow channels 70 of the lower-side thermal management component 73 extend in the first direction X, and the plurality of flow channels 70 are arranged in the second direction Y. Since the plurality of flow channels 70 are formed, a flow channel area of the lower-side thermal management component 73 for temperature adjustment can be enlarged by using the plurality of flow channels 70, which increases a flow velocity of the fluid, thereby improving the thermal management efficiency.

However, this is not limited thereto. It is also possible that one of the lower-side thermal management component 73 and the intermediate thermal management component 71 is a plate component without flow channels, and the other one is provided with a plurality of flow channels 70. In this case, the plate component can be made of a material with good thermal conductivity, and the fluid in the plurality of flow channels 70 and the plate component with good thermal conductivity are used to perform temperature adjustment, which can also improve the thermal management efficiency.

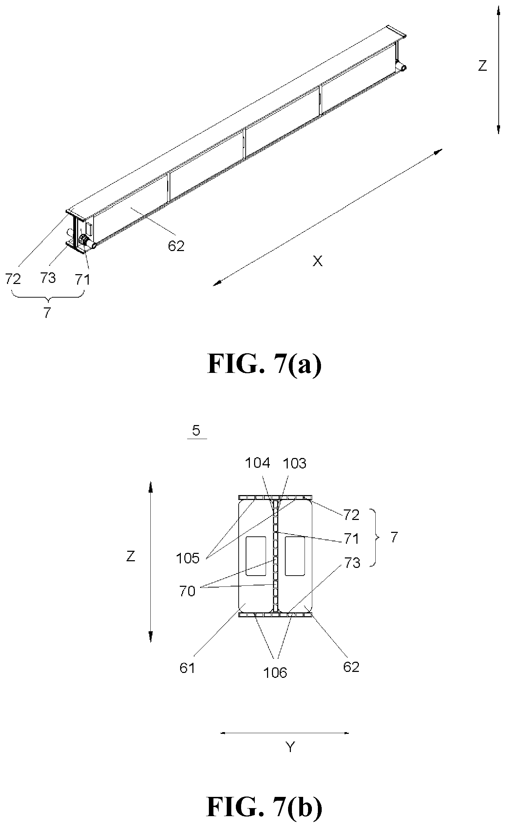

Fig. 7(a) is a schematic diagram of a three-dimensional structure of a thermal management module 5 according to an embodiment of the present application. Fig. 7(b) is a directional view obtained by observing an end portion of the thermal management module 5 shown in Fig. 7(a) in the first direction X (the illustration of the fluid pipe head is omitted). In the following descriptions, parts different from the implementations that have been described will be mainly described. The same constituent parts will be marked with the same reference numerals, and their descriptions will be omitted.

In the thermal management module 5, besides the intermediate thermal management component 71 located between the first battery cell 61 and the second battery cell 62, the thermal management component 7 further includes an upper-side thermal management component 72 for performing temperature adjustment on the third side surfaces 105 of the first battery cell 61 and the second battery cell 62, and a lower-side thermal management component 73 for performing temperature adjustment on the fourth side surfaces 106 of the first battery cell 61 and the second battery cell 62. The thermal management component 7 is of an I-shaped structure as a whole since it includes the intermediate thermal management component 71, the upper-side thermal management component 72, and the lower-side thermal management component 73. Thus, the thermal management component 7 can use the upper-side thermal management component 72 to perform temperature adjustment on the third side surfaces 105 of the first battery cell 61 and the second battery cell 62 and use the lower-side thermal management component 73 to perform temperature adjustment on the fourth side surfaces 106 of the first battery cell 61 and the second battery cell 62 while using the intermediate thermal management component 71 to perform temperature adjustment on the second side surface 104 of the first battery cell 61 and the first side surface 103 of the second battery cell 62. Therefore, the area for temperature adjustment can be further enlarged, and the thermal management efficiency can be improved.

As shown in Fig. 7(a) and Fig. 7(b), the intermediate thermal management component 71, the upper-side thermal management component 72, and the lower-side thermal management component 73 are provided with a plurality of flow channels 70 configured to circulate a fluid, and the flow channels 70 extend in the first direction X. The plurality of flow channels 70 of the intermediate thermal management component 71 are arranged in the third direction Z, and the plurality of flow channels 70 of the upper-side thermal management component 72 and the lower-side thermal management component 73 are arranged in the second direction Y. Thus, in a case that the thermal management component 7 includes the intermediate thermal management component 71, the upper-side thermal management component 72, and the lower-side thermal management component 73, the area for temperature adjustment can be further enlarged by using the plurality of flow channels 70 arranged in the thermal management components, and the thermal management efficiency can be improved.

However, this is not limited thereto. It is also possible that the upper-side thermal management component 72 and the lower-side thermal management component 73 are plate components without flow channels, and the intermediate thermal management component 71 is provided with a plurality of flow channels 70. At this time, in a case that the thermal management component 7 includes the intermediate thermal management component 71, the upper-side thermal management component 72, and the lower-side thermal management component 73, the upper-side thermal management component 72 and the lower-side thermal management component 73 can be made into the plate components from a material with good thermal conductivity, and the fluid in the plurality of flow channels 70 arranged in the intermediate thermal management component 71, and the upper-side thermal management component 72 and the lower-side thermal management component 73 which serve as the plate components with good thermal conductivity can be used to perform temperature adjustment, which can also improve the thermal management efficiency.

It can also be possible that the upper-side thermal management component 72 and the lower-side thermal management component 73 are provided with a plurality of flow channels 70, and the intermediate thermal management component 71 is a plate component without flow channels. At this time, in a case that the thermal management component 7 includes the intermediate thermal management component 71, the upper-side thermal management component 72, and the lower-side thermal management component 73, the intermediate thermal management component 71 can be made into the plate component from a material with good thermal conductivity, and the fluid in the plurality of flow channels 70 arranged in the upper-side thermal management component 72 and the lower-side thermal management component 73, and the intermediate thermal management component 71 which serves as the plate component with good thermal conductivity can be used to perform temperature adjustment, which can also improve the thermal management efficiency.

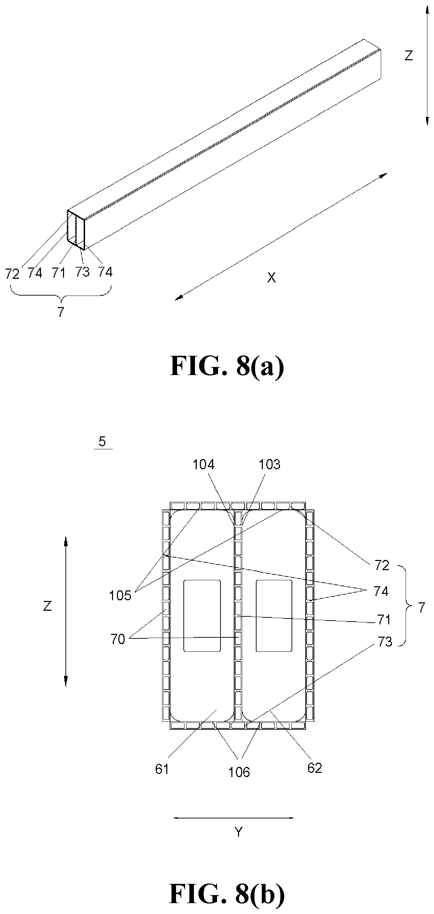

Fig. 8(a) is a schematic diagram of a three-dimensional structure of a thermal management module 5 according to an embodiment of the present application. Fig. 8(b) is a directional view obtained by observing an end portion of the thermal management module 5 shown in Fig. 8(a) in the first direction X. In the following descriptions, parts different from the implementations that have been described will be mainly described. The same constituent parts will be marked with the same reference numerals, and their descriptions will be omitted.

In the thermal management module 5, the thermal management component 7 includes the intermediate thermal management component 71 located between the first battery cell 61 and the second battery cell 62, the upper-side thermal management component 72 for performing temperature adjustment on the third side surfaces 105 of the first battery cell 61 and the second battery cell 62, and the lower-side thermal management component 73 for performing temperature adjustment on the fourth side surfaces 106 of the first battery cell 61 and the second battery cell 62, and further includes two lateral thermal management components 74 for performing temperature adjustment on other side surfaces, that is, the first side surface 103 of the first battery cell 61 and the second side surface 104 of the second battery cell 62. Since the thermal management component 7 includes the intermediate thermal management component 71, the upper-side thermal management component 72, the lower-side thermal management component 73, and the lateral thermal management components 74, the thermal management component 7 can be used to perform temperature adjustment on all the side surfaces 102 of the first battery cell 61 and the second battery 62, that is, the side surfaces 102 of the battery cells 6 are surrounded by the thermal management component 7. Thus, in each of the battery cells 6, except for the end surface 101 provided with the electrode terminal 601, the thermal management component 7 is used to perform temperature adjustment on all the side surfaces 102, so that the temperature adjustment area can be enlarged to the largest extent, and the thermal management efficiency can be improved, so as to improve the safety of the battery.

As shown in Fig. 8(a) and Fig. 8(b), the intermediate thermal management component 71, the upper-side thermal management component 72, the lower-side thermal management component 73, and the lateral thermal management components 74 are provided with a plurality of flow channels 70 configured to circulate a fluid, and the flow channels 70 extend in the first direction X. The plurality of flow channels 70 of the intermediate thermal management component 71 and the lateral thermal management components 74 are arranged in the third direction Z, and the plurality of flow channels 70 of the upper-side thermal management component 72 and the lower-side thermal management component 73 are arranged in the second direction Y. Thus, in a case that the thermal management component 7 includes the intermediate thermal management component 71, the upper-side thermal management component 72, the lower-side thermal management component 73, and the lateral thermal management components 74, the area for temperature adjustment can be further enlarged by using the plurality of flow channels 70 arranged in the thermal management components, and the thermal management efficiency can be improved.

But it is not limited thereto, and it can also be possible that at least any one of the intermediate thermal management component 71, the upper-side thermal management component 72, the lower-side thermal management component 73, and the lateral thermal management components 74 is provided with a plurality of flow channels 70, and other thermal management components are plate components without flow channels. In this case, the plate component can be made of a material with good thermal conductivity, and the fluid in the plurality of flow channels 70 and the plate component with good thermal conductivity are used to perform temperature adjustment, which can also improve the thermal management efficiency.

In addition, in some embodiments, when the intermediate thermal management component 71 is formed by the plate component with good thermal conductivity and rigidity, the intermediate thermal management component 71 can be used as the supporting beam of the battery 1, so that an additional component used as the supporting beam is not required, which can reduce a quantity of components, enlarge a space for arranging the battery cells 6, and improve the overall energy density and power supplying capacity of the battery.

In addition, in some embodiments, the upper-side thermal management component 72 and/or the lower-side thermal management component 73 and the intermediate thermal management component 71 are integrally formed. The thermal management module 5 can be modularized more easily by means of integrally forming the upper-side thermal management component 72 and/or the lower-side thermal management component 73 and the intermediate thermal management component 71, which improves the mounting accuracy and assembling efficiency of the thermal management module 5, but it is not limited thereto. The upper-side thermal management component 72 and/or the lower-side thermal management component 73 and the intermediate thermal management component 71 can also be formed separately, and are connected together by structural splicing, welding, bonding, or other connection methods.

In addition, in some embodiments, the battery 1 is provided with a box 4. The box 4 accommodates the battery cells 6 and the thermal management component 7. The upper-side thermal management component 72 and/or the lower-side thermal management component 73 are integrated to the box 4. That is, when the upper-side thermal management component 72 and/or the lower-side thermal management component 73 are formed, the upper-side thermal management component 72 and/or the lower-side thermal management component 73 are integrated into the box 4 of the battery 1. For example, when the box 4 is provided with an upper cover 41 and a box shell 42, the upper-side thermal management component 72 is integrated to the upper cover 41, and the lower-side thermal management component 73 is integrated to the box shell 42. Thus, the box 4 integrated with the thermal management component 7 can be used to form a thermal management environment that wraps the entire battery, thereby improving the safety of the battery. Furthermore, the structure of the battery can be simplified, and the space for arranging the battery cells 6 in the box 4 of the battery 1 is enlarged, thereby improving the energy density and power supplying performance of the battery.

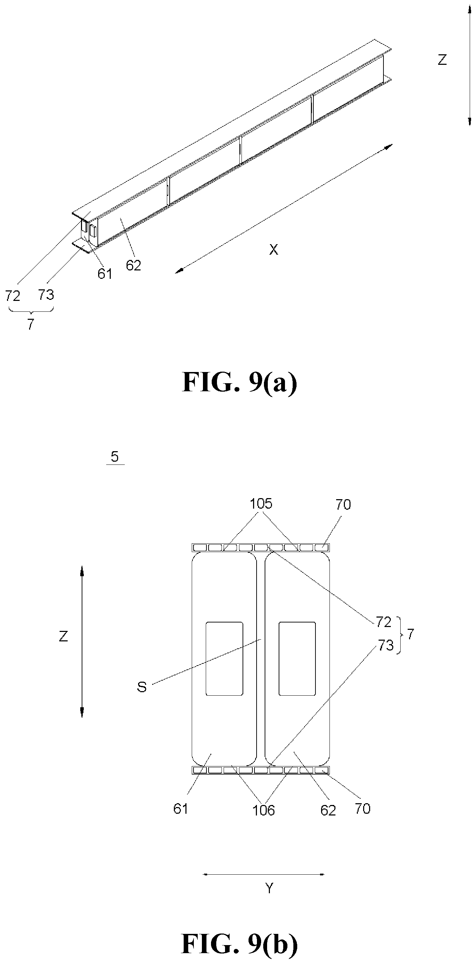

In the various embodiments described above, the thermal management component 7 includes the intermediate thermal management component 71, but the present application is not limited thereto. The intermediate thermal management component 71 may not be arranged. A thermal management component 7 without the intermediate thermal management component 71 will be described below with reference to Fig. 9(a) and Fig. 9(b).

Fig. 9(a) is a schematic diagram of a three-dimensional structure of a thermal management module 5 according to an embodiment of the present application. Fig. 9(b) is a directional view obtained by observing an end portion of the thermal management module 5 shown in Fig. 9(a) in the first direction X.

In the thermal management module 5, the thermal management component 7 includes an upper-side thermal management component 72 for performing temperature adjustment on the third side surfaces 105 of the first battery cell 61 and the second battery cell 62, and a lower-side thermal management component 73 for performing temperature adjustment on the fourth side surfaces 106 of the first battery cell 61 and the second battery cell 62, and a gap S is formed between the first battery cell 61 and the second battery cell 62. In this embodiment, the thermal management module 5 is not provided with the intermediate thermal management component 71 between the first battery cell 61 and the second battery cell 62, but the gap S is formed between the first battery cell 61 and the second battery cell 62, so that the temperature adjustment of the battery cells 6 is achieved by using the upper-side thermal management component 72 and the lower-side thermal management component 73. This gap S can be used to arrange other desired structural components to increase the degree of configurational freedom.

In this embodiment, the upper-side thermal management component 72 and/or the lower-side thermal management component 73 may be integrated to the box shell 4 of the battery 1. That is, in this embodiment where no intermediate thermal management component 71 is arranged between the first battery cell 61 and the second battery cell 62, the upper-side thermal management component 72 and/or the lower-side thermal management component 73 can also be integrated to the box 4 of the battery 1. Thus, the box 4 integrated with the thermal management component 7 can be used to form a thermal management environment that wraps the entire battery, thereby improving the safety of the battery. Furthermore, the structure of the battery can be simplified, and the space for arranging the battery cells 6 in the box 4 of the battery 1 is enlarged, thereby improving the energy density and power supplying performance of the battery.

In addition, a thermal insulation component may be arranged in the gap S. Thus, heat transfer between the first battery cell 61 and the second battery cell 62 can be blocked by using the thermal insulation component. When the thermal insulation component arranged in the gap S has sufficient rigidity, the thermal insulation component can be used as the supporting beam of the battery 1, thereby reducing a quantity of components, increasing the utilization rate of a space inside the battery, and increasing the overall energy density of the battery.

In the thermal management module 5 shown above, the plurality of battery cells 6 are arranged in the first direction X, and the thermal management component 7 extends in the first direction X to perform thermal management on the plurality of battery cells 6. In a case that the plurality of battery cells 6 are arranged in the first direction X, if the thermal management component 7 also extends in the first direction X, the thermal management component 7 can perform thermal management on the plurality of battery cells 6, so that the thermal management efficiency of the entire thermal management module 5 can be improved.

The structure in which the battery cells 6 are formed in a cuboid has been described above, but it is not limited thereto. For example, in a case that the barrel cell 6 is cylindrical, the thermal management component 7 can also be formed by abutting against the side surfaces of the battery cell 6 in a manner of partially wrapping the side surfaces of the cylinder or overall wrapping the side surfaces of the cylinder, so as to use the thermal management component 7 to perform temperature adjustment on the side surfaces of the battery cell 6. At this time, the thermal management module 5 also includes the first battery cell 61 and the second battery cell 62 which are adjacent to each other in the second direction Y, and the thermal management component 7 for performing temperature adjustment on the battery cells.

An embodiment of the present application further provides an electrical apparatus. The electrical apparatus can include the battery 1 in the various foregoing embodiments. Battery 1 is configured to provide electrical energy in the electrical apparatus.

The battery and the electrical apparatus of the embodiments of the present application are described above, and a method and apparatus for preparing a battery of the embodiments of the present application will be described below. For parts not described in detail, refer to the foregoing embodiments.

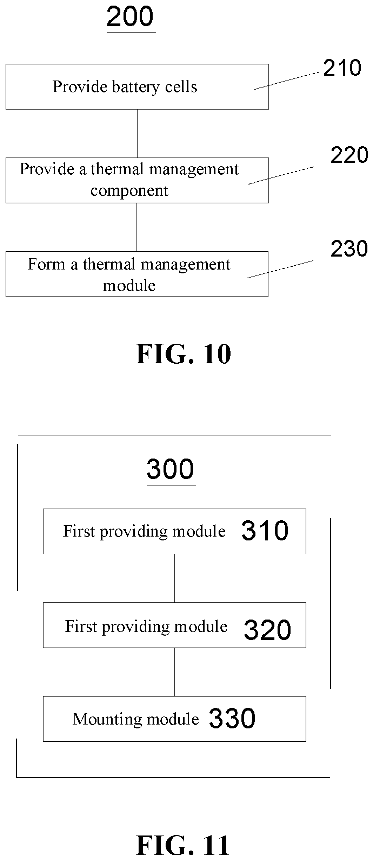

Fig. 10 is a schematic flowchart of a method 200 for preparing a battery according to an embodiment of the present application. As shown in Fig. 10, the method 200 may include:
210, providing battery cells 6, wherein each of the battery cells 6 includes: two end surfaces 101 opposite to each other in a first direction X, and side surfaces 102, wherein at least any one of the end surfaces 101 is provided with an electrode terminal 601; the battery cells 6 include a first battery cell 61 and a second battery cell 62 which are adjacent in a second direction Y, and the second direction Y is orthogonal to the first direction X;
220, providing a thermal management component 7, wherein the thermal management component 7 performs temperature adjustment on the side surfaces 102 of the battery cells 6; and
230, combining the thermal management component 7 for performing temperature adjustment on the first battery cell 61 and the second battery cell 62 with the first battery cell 61 and the second battery cell 62 to form a thermal management module 5.

Fig. 11 is a schematic block diagram of an apparatus 300 for preparing a battery according to an embodiment of the present application. As shown in Fig. 11, the apparatus 300 for preparing the battery may include: a first providing module 310, a second providing module 320, and a mounting module 330.

The first providing module 310 is configured to provide battery cells 6, wherein each of the battery cells 6 includes: two end surfaces 101 opposite to each other in a first direction X, and side surfaces 102, wherein at least any one of the end surfaces 101 is provided with an electrode terminal 601; the battery cells 6 include a first battery cell 61 and a second battery cell 62 which are adjacent in a second direction Y, and the second direction Y is orthogonal to the first direction X.

The second providing module 320 is configured to provide a thermal management component 7, wherein the thermal management component 7 performs temperature adjustment on the side surfaces 102 of the battery cells 6.

The mounting module 330 is configured to combine the thermal management component 7 for performing temperature adjustment on the first battery cell 61 and the second battery cell 62 with the first battery cell 61 and the second battery cell 62 to form a thermal management module 5.

It should be finally noted that: The foregoing embodiments are merely intended to describe the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to partial technical features thereof. However, these modifications or replacements do not make the essence of the corresponding technical solutions depart from the spirit and scope of the technical solutions of the various embodiments of the present application.

## Claims

1. A battery, comprising:
battery cells, each comprising two end surfaces opposite to each other in a first direction, wherein at least any one of the end surfaces is provided with an electrode terminal; and
a thermal management component,
wherein each of the battery cells further comprises side surfaces, and the thermal management component performs temperature adjustment on the side surfaces of the battery cell,
the battery cells comprise a first battery cell and a second battery cell which are adjacent in a second direction, and the second direction is orthogonal to the first direction, and
the thermal management component for performing temperature adjustment on the first battery cell and the second battery cell forms a thermal management module together with the first battery cell and the second battery cell.

2. The battery according to claim 1, wherein
the side surfaces of each battery cell comprise: a first side surface and a second side surface which are opposite to each other in the second direction; and a third side surface and a fourth side surface which are opposite to each other in a third direction; the third direction is orthogonal to the first direction and the second direction; and
the thermal management component abuts against at least any one of the first side surface, the second side surface, the third side surface, and the fourth side surface, so as to perform temperature adjustment on the abutted side surface.

3. The battery according to claim 2, wherein
the first side surface, the second side surface, the third side surface, and the fourth side surface of each battery cell are formed as planar.

4. The battery according to claim 2 or 3, wherein
in the thermal management module, the thermal management component comprises an intermediate thermal management component arranged between the first battery cell and the second battery cell; and
the intermediate thermal management component abuts against the second side surface of the first battery cell and the first side surface of the second battery cell respectively.

5. The battery according to claim 4, wherein
the intermediate thermal management component is provided with a plurality of flow channels configured to circulate a fluid.

6. The battery according to claim 4 or 5, wherein
in the thermal management module, the thermal management component further comprises an upper-side thermal management component for performing temperature adjustment on the third side surfaces of the first battery cell and the second battery cell, or a lower-side thermal management component for performing temperature adjustment on the fourth side surfaces of the first battery cell and the second battery cell.

7. The battery according to claim 6, wherein
the upper-side thermal management component or the lower-side thermal management component is provided with a plurality of flow channels configured to circulate a fluid.

8. The battery according to claim 4, wherein
in the thermal management module, the thermal management component further comprises an upper-side thermal management component for performing temperature adjustment on the third side surfaces of the first battery cell and the second battery cell, and a lower-side thermal management component for performing temperature adjustment on the fourth side surfaces of the first battery cell and the second battery cell.

9. The battery according to claim 8, wherein
the upper-side thermal management component and the lower-side thermal management component are provided with a plurality of flow channels, and the intermediate thermal management component is provided with a plurality of flow channels.

10. The battery according to claim 8, wherein
the upper-side thermal management component and the lower-side thermal management component are plate components without flow channels, and the intermediate thermal management component is provided with a plurality of flow channels.

11. The battery according to claim 8, wherein
the upper-side thermal management component and the lower-side thermal management component are provided with a plurality of flow channels, and the intermediate thermal management component is a plate component without flow channels.

12. The battery according to claim 11, wherein
the intermediate thermal management component is used as a supporting beam of the battery.

13. The battery according to claim 8, wherein
in the thermal management module, the thermal management component further comprises a lateral thermal management component for performing temperature adjustment on other side surfaces of the first battery cell and the second battery cell, so that the thermal management component is used to perform temperature adjustment on all the side surfaces of the first battery cell and the second battery cell.

14. The battery according to any one of claims 6 to 13, wherein
the upper-side thermal management component and/or the lower-side thermal management component and the intermediate thermal management component are integrally formed.

15. The battery according to any one of claims 6 to 13, wherein
the battery is provided with a box; the box is configured to accommodate the battery cells and the thermal management component; and
the upper-side thermal management component and/or the lower-side thermal management component are integrated to the box.

16. The battery according to claim 2 or 3, wherein
in the thermal management module, the thermal management component comprises an upper-side thermal management component for performing temperature adjustment on the third side surfaces of the first battery cell and the second battery cell, and a lower-side thermal management component for performing temperature adjustment on the fourth side surfaces of the first battery cell and the second battery cell; and a gap is formed between the first battery cell and the second battery cell.

17. The battery according to claim 16, wherein
the battery is provided with a box; the box is configured to accommodate the battery cells and the thermal management component; and
the upper-side thermal management component and/or the lower-side thermal management component are integrated to the box.

18. The battery according to claim 16 or 17, wherein
a thermal insulation component is arranged in the gap.

19. The battery according to claim 18, wherein
the thermal insulation component is used as a supporting beam of the battery.

20. The battery according to any one of claims 1 to 19, wherein
in the thermal management module, the plurality of battery cells are arranged in the first direction, and the thermal management component extends in the first direction to perform thermal management on the plurality of battery cells.

21. An electrical apparatus, comprising the battery according to any one of claims 1 to 20, wherein the battery is configured to provide electric energy.

22. A method for preparing a battery, comprising:
providing battery cells, wherein each of the battery cells comprises: two end surfaces opposite to each other in a first direction, and side surfaces, wherein at least any one of the end surfaces is provided with an electrode terminal; the battery cells comprise a first battery cell and a second battery cell which are adjacent in a second direction, and the second direction is orthogonal to the first direction; and
providing a thermal management component, wherein the thermal management component performs temperature adjustment on the side surfaces of the battery cells; and
combining the thermal management component for performing temperature adjustment on the first battery cell and the second battery cell with the first battery cell and the second battery cell to form a thermal management module.

23. An apparatus for preparing a battery, comprising:
a first providing module, configured to provide battery cells, wherein each of the battery cells comprises: two end surfaces opposite to each other in a first direction, and side surfaces, wherein at least any one of the end surfaces is provided with an electrode terminal; the battery cells comprise a first battery cell and a second battery cell which are adjacent in a second direction, and the second direction is orthogonal to the first direction;
a second providing module, configured to provide a thermal management component, wherein the thermal management component performs temperature adjustment on the side surfaces of the battery cells; and
a mounting module, configured to combine the thermal management component for performing temperature adjustment on the first battery cell and the second battery cell with the first battery cell and the second battery cell to form a thermal management module.
